# EUROPÄISCHE PATENTSCHRIFT

(11) **EP 3 012 619 B1**
(45) Veröffentlichungstag und Bekanntmachung des Hinweises auf die Patenterteilung: **02.12.2020**
(21) Anmeldenummer: 15190198.0
(22) Anmeldetag: 16.10.2015
(51) Int. Cl.: G01N 21/45, G01N 21/958, G01M 11/02

(54) **VERFAHREN ZUR BESTIMMUNG EINES LOKALEN BRECHWERTS UND VORRICHTUNG HIERFÜR**
METHOD FOR DETERMINING A LOCAL REFRACTIVE POWER AND DEVICE FOR SAME
PROCEDE DE DETERMINATION D'UN POUVOIR DE REFRACTION LOCAL ET DISPOSITIF ASSOCIE

(30) Priorität: 21.10.2014 DE 102014115336
(43) Veröffentlichungstag der Anmeldung: 27.04.2016
(73) Patentinhaber: Isra Surface Vision GmbH, 45699 Herten (DE)
(72) Erfinder: KUBIAK, Rolf, 44269 Dortmund (DE); RIPPERDA, Christian, 50678 Köln (DE)
(74) Vertreter: Keil & Schaafhausen Patentanwälte PartGmbB

(56) Entgegenhaltungen:
- EP-A1- 2 637 011
- US-A1- 2013 293 726
- Markus C Knauer ET AL: "Measuring the refractive power with deflectometry in transmission", , 1. Januar 2008 (2008-01-01), XP055258550, Gefunden im Internet: URL:http://www.dgao-proceedings.de/downloa d/109/109_a24.pdf [gefunden am 2016-03-15]

## Beschreibung

Die vorliegende Erfindung betrifft ein Verfahren zur Bestimmung eines lokalen Brechwerts in einem Volumenelement eines transparenten Gegenstands mit einem Muster, das durch den transparenten Gegenstand hindurch mittels einer Kamera beobachtet wird. Die Erfindung betrifft ferner eine Vorrichtung hierfür.

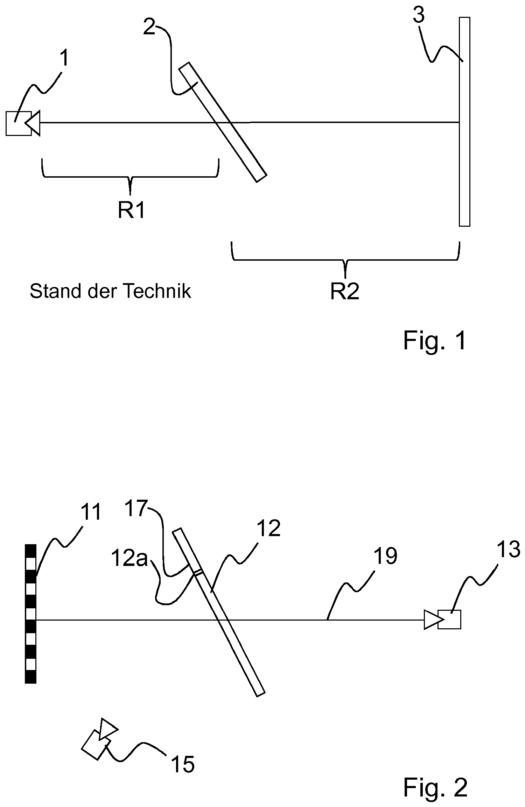

Für die Qualitätsprüfung von transparenten Gegenständen, z.B. Scheiben für Automobile, wird häufig die optische Verzerrung, welche in einen lokalen Brechwert umgerechnet werden kann, mit der in Figur 1 dargestellten Vorrichtung gemessen. Nach dem in der Richtlinie ECE-R43 angegebenen bekannten Verfahren wird ein Projektor 1 verwendet, der ein vorgegebenes Muster durch einen transparenten Gegenstand (z.B. Windschutzscheibe) hindurch auf eine Projektionswand 3 projiziert. Dort wird mit elektronischen Mitteln oder auch manuell das durch die Windschutzscheibe 2 hindurchgehende Licht des Projektors 1 beobachtet. Die Windschutzscheibe 2 wird häufig in Einbaulage geprüft. Da die Windschutzscheibe 2 eine nicht zu vernachlässigende Ausdehnung besitzt, stimmt die bekannte Entfernung (Propagationslänge) R₁ zwischen Projektor 1 und Windschutzscheibe 2 sowie R₂ zwischen Windschutzscheibe 2 und Projektionswand 3 nur für den Bereich der Windschutzscheibe 2, der auf optischen Achse zwischen Projektor 1 und Projektionswand 3 liegt. Die Volumenelemente der Windschutzscheibe, die von der optischen Achse entfernt liegen, haben zum Projektor 1 und der Projektionswand 3 einen größeren Abstand. Daher ist es in der oben genannten Richtlinie vorgeschrieben, Präzisionsmessungen des Brechwerts nur auf der optischen Achse durchzuführen. Dies bedeutet, dass entweder die Windschutzscheibe 2 oder der Projektor 1 mit der Projektionswand 3 bewegt werden muss, um einen größeren Bereich der Windschutzscheibe zu untersuchen. Dies ist insbesondere im Hinblick auf die Messdauer sehr aufwendig.

In der Druckschrift US 2013/293726 A1 wird ein Linseninspektionssystem offenbart, durch das die Lage und Form der Oberfläche der Linse bestimmt wird. Mittels Transmissions- und Reflexionsmessungen werden die obere Linsenoberfläche und/oder die untere Linsenoberfläche untersucht.

Die Druckschrift EP 2 637 011 A1 beschäftigt sich mit der Vermessung der zwei Oberflächen einer optischen Komponente ohne vorherige Kenntnis der Komponentendaten außer dem Brechungsindex. Hierfür werden Reflexions- und Transmissionsmessungen durchgeführt. Diese dienen der Feststellung der Geometrie der Oberflächen der Komponente.

Im Artikel "Measuring the refractive power with deflectometry in transmission", DGaO Proceedings 2008, ISSN: 1614-8436 zeigen M. C. Knauer et. al. die Anwendung einer Transmissionsmessung, um die lokale und die mittlere Brechkraft in eine einzige Richtung zu bestimmen. Eine Korrektur erfolgt hinsichtlich der Dicke des Objekts oder der Neigung der Linse.

Die Aufgabe der vorliegenden Erfindung besteht somit darin, ein einfacheres und kostengünstigeres Verfahren anzugeben, mit dem eine Präzisionsmessung des lokalen Brechwerts an einem transparenten Gegenstand durchgeführt werden kann. Entsprechend besteht weiter die Aufgabe darin, eine kostengünstige Vorrichtung hierfür zu schaffen.

Die obige Aufgabe wird durch ein Verfahren mit den Merkmalen des Anspruchs 1 gelöst. Insbesondere wird bei dem erfindungsgemäßen Verfahren die dreidimensionale Form und Lage der dem Muster zugewandten Oberfläche des jeweiligen Volumenelements des transparenten Gegenstands ermittelt und zur Bestimmung des lokalen Brechwerts herangezogen. Die Bestimmung des lokalen Brechwerts dient dabei zur Ermittlung und Klassifizierung von optischen Fehlern, die optische Verzerrungen hervorrufen, z.B. im Rahmen einer automatischen Qualitätsprüfung des transparenten Gegenstands. Hierfür werden automatisch die ermittelten lokalen Brechwerte mit vorgegebenen Brechwerten verglichen. Stimmen diese nicht überein beziehungsweise bestehen zu große Diskrepanzen zwischen den ermittelten lokalen Brechwerten und vorgegebenen Brechwerten für das jeweilige Volumenelement oder einen ausgewählten Bereich des transparenten Gegenstands, so wird z.B. ein Fehler gemeldet (beispielsweise ein Fehler optisch und/oder akustisch angezeigt) und/oder der jeweilige Gegenstand aus dem Produktionsprozess ausgesondert. Das Volumenelement ist hierbei ein 3-dimensionales Element/Teil des transparenten Gegenstands, wobei sich der transparente Gegenstand aus einer Vielzahl dieser Volumenelemente zusammensetzt.

Hierbei wird unter dem lokalen Brechwert (Brechkraft) der Brechwert in dem jeweiligen Volumenelement des Gegenstands verstanden, der sich aus den jeweiligen Krümmungen der Oberflächen des jeweiligen Volumenelements, der Beschaffenheit des Volumenelements und der Brechzahl (optische Materialeigenschaft des Gegenstands) ergibt und der Kehrwert der (lokalen) Brennweite ist. Der lokale Brechwert wird dabei in eine beliebige Richtung (optische Achse) bestimmt, z.B. eine Richtung, die bei der jeweiligen Qualitätsprüfung vorgeschrieben ist, beispielsweise die Durchsichts-Richtung durch eine Windschutzscheibe in Einbaulage.

In einem bevorzugten Ausführungsbeispiel wird die dreidimensionale Form der Oberfläche und Lage in Bezug auf das jeweilige Volumenelement mithilfe einer Kamera mittels Deflektometrie ermittelt. Alternativ kann die dreidimensionale Form und Lage der Oberfläche mittels Verfahren mit Referenzmarken, mittels rein mechanischer, taktiler Messungen oder mittels einer Vermessung von diffus reflektierenden Oberflächen durch Triangulation bestimmt werden.

Das erfindungsgemäße Verfahren beruht auf der Erkenntnis, dass dann, wenn die dreidimensionale geometrische Form des transparenten und auch spiegelnden Gegenstands gemessen werden kann, es vorteilhaft ist, diese Formdaten zur Korrektur der Brechwertmessung in Transmission zu verwenden. Ist die Form des Gegenstands bekannt, dann lassen sich entsprechende geometrische Korrekturen vornehmen. Es müssen nicht zwingend Messungen des Brechwerts für alle Volumenelemente auf der optischen Achse durchgeführt werden. Erfindungsgemäß werden für die Volumenelemente, die bei der oben beschriebenen Brechwert-Bestimmung nicht auf der optischen Achse liegen, aufgrund der bekannten dreidimensionalen Form und Lage des jeweiligen Volumenelements des Gegenstands eine der Entfernung von der optischen Achse entsprechende beziehungsweise der Krümmung der Oberfläche entsprechende Korrektur des Brechwerts vorgenommen werden. Dies verkürzt erheblich die Messzeit und erhöht gleichzeitig die Genauigkeit der Messung, da die richtige Propagationslänge verwendet werden kann. Weiterhin besitzt das erfindungsgemäße Vorgehen deshalb eine höhere Prozesssicherheit. Zudem ist der Platzbedarf geringer.

Aufgrund der Kenntnis der Form der Oberfläche des transparenten Gegenstands und der Lage der einzelnen Volumenelemente können diesen Volumenelementen echte Koordinaten zugeordnet werden.

Es ist weiterhin von Vorteil, dass erfindungsgemäß optische Effekte gemessen werden, die sowohl von der großflächigen Form des Gegenstands als auch durch lokale Deformationen auf der Oberfläche oder im Volumen des Gegenstands verursacht werden. Wenn erfindungsgemäß die dreidimensionale Gesamtform (Oberflächenform der einzelnen Volumenelemente und ihre Lage) des Gegenstands bekannt ist, können durch die Vorrichtung globale Effekte herausgerechnet werden, die durch die Gesamtform des Gegenstands hervorgerufen werden. Mit anderen Worten kann die Brechkraft jedes Volumenelements aufgeteilt werden in einen durch die globale Gesamtform des Gegenstands hervorgerufenen Anteil und einen Anteil, für den lediglich die durch lokale Deformationen (z.B. Defekte auf der Oberfläche oder im Volumen) verursachten optischen Effekte bedeutsam sind. Es können demnach mit der vorliegenden Erfindung großflächige und lokale optische Effekte getrennt werden.

Die Bestimmung der dreidimensionalen Form der Oberfläche des transparenten Gegenstands kann vor der Brechwertmessung in Transmission oder gleichzeitig mit dieser Messung erfolgen.

Weiter können die Messergebnisse der Transmissionsoptik, d.h. die ermittelten Brechkräfte, perspektivisch korrigiert dargestellt werden, da die Form der Oberfläche des transparenten Gegenstands bekannt ist.

In einem bevorzugten Ausführungsbeispiel wird zur Erzeugung des Musters ein dynamisches Gitter verwendet. Dies kann verschiedene Muster für die Brechwertbestimmung erzeugen, beispielsweise für unterschiedliche Anforderungen z.B. von Auftraggebern hinsichtlich der Qualitätsprüfung. Durch das dynamische Gitter werden elektronisch Muster erzeugt, die für den jeweiligen Messzweck geeignet sind. Der lokale Brechwert wird für jedes Volumenelement aus der lokalen Verzerrung des in Transmission betrachteten Musters bestimmt.

Bei der Verwendung eines dynamischen Gitters ist für jedes Muster jeweils eine gesonderte Messung erforderlich, wobei die Messungen zeitlich aufeinanderfolgend stattfinden. In einem bevorzugten Ausführungsbeispiel können verschiedene Muster farbkodiert und/oder hinsichtlich ihrer Polarisation kodiert werden, so dass eine gleichzeitige Projektion und Messung möglich ist, was eine weitere Zeitersparnis bewirkt. Beispielsweise können drei verschiedene Gitter mittels dreier Fotodioden (rot, gelb, blau) erzeugt werden. Hierdurch können diese drei Gitter gleichzeitig vermessen werden. Die die Transmissionsbilder der Gitter aufnehmende Kamera kann eine Unterscheidung der verschiedenen Gitter mittels Farb- und/oder Polarisationsfilter realisieren.

In einem weiteren bevorzugten Ausführungsbeispiel wird die dreidimensionale Gesamtform der dem Muster zugewandten Oberfläche des transparenten Gegenstands durch Zusammensetzen der dreidimensionalen Formen der Oberflächen aller Volumenelemente bestimmt. Die Gesamtform der Oberfläche des transparenten Gegenstands wird somit aus den einzelnen Formen der Volumenelemente unter Berücksichtigung der Lage des jeweiligen Volumenelements zusammengesetzt. Gegebenenfalls werden bei einem größeren transparenten Gegenstand und/oder größeren Krümmungen in der Oberfläche des Gegenstands mehrere Kameras benötigt, um die Gesamtform des transparenten Gegenstands zu ermitteln, wobei jede Kamera einen Teilbereich des transparenten Gegenstands beobachtet.

Es ist weiter von Vorteil, dass aufgrund der Kenntnis der dreidimensionalen Gesamtform der Oberfläche des transparenten Gegenstands die Krümmungen dieser Oberfläche und damit die Brechkräfte des transparenten Gegenstands bezogen auf verschiedene Blickwinkel bekannt sind. Damit lässt sich die Optik der Scheibe, die allein von der durch das Design bestimmten Form des Gegenstands herrührt berechnen.

In einer Weiterbildung der Erfindung wird die dreidimensionale Gesamtform der dem Muster zugewandten Oberfläche des transparenten Gegenstands mit CAD-Daten zu dem transparenten Gegenstand verglichen und hieraus ein für die Bestimmung des lokalen Brechwerts auszuwählender Sichtbereich ermittelt. Ein solcher Sichtbereich (Sichtfeld) ist für die Prüfung transparenter Gegenstände teilweise vorgeschrieben, da häufig für die Qualitätsprüfung nicht der gesamte transparente Gegenstand sondern lediglich ein besonderer, in der jeweiligen Anforderung meist definierter Bereich des Gegenstands von Bedeutung ist.

Die obige Aufgabe wird ferner durch eine Vorrichtung zur Bestimmung eines lokalen Brechwerts in einem Volumenelement eines transparenten Gegenstands mit den Merkmalen des Anspruchs 7 gelöst. Insbesondere ist die Vorrichtung dazu eingerichtet, den lokalen Brechwert mithilfe eines vorgegebenen Musters zu bestimmen, das durch den transparenten Gegenstand hindurch mittels einer Kamera beobachtbar ist, und die dreidimensionale Form und Lage der dem Muster zugewandten Oberfläche des jeweiligen Volumenelements des transparenten Gegenstands (z.B. in Reflexion) zu ermitteln und zur Bestimmung des lokalen Brechwerts heranzuziehen.

Wie oben bereits erläutert wurde, kann die erfindungsgemäße Vorrichtung im Rahmen der automatischen Qualitätsprüfung eines transparenten Gegenstands eingesetzt werden.

Die erfindungsgemäße Vorrichtung weist die oben zu dem erfindungsgemäßen Verfahren genannten Vorteile auf. Sie ist zur Durchführung der oben beschriebenen Verfahrensschritte eingerichtet.

Weitere Vorteile, Merkmale und Anwendungsmöglichkeiten der vorliegenden Erfindung ergeben sich auch aus der nachfolgenden Beschreibung eines Ausführungsbeispiels und den Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:
- Figur 1: eine Vorrichtung zur Bestimmung eines lokalen Brechwerts in einem Volumenelement eines transparenten Gegenstands nach dem Stand der Technik in einer Ansicht von der Seite und
- Figur 2: eine erfindungsgemäße Vorrichtung zur Bestimmung eines lokalen Brechwerts in einem Volumenelement eines transparenten Gegenstands in einer Ansicht von der Seite.

In der in Figur 2 dargestellten Vorrichtung wird ein von einem dynamischen Gitter 11 erzeugtes beliebiges Muster von einer ersten Kamera 13 durch einen transparenten Gegenstand in Form einer Windschutzscheibe 12 hindurch beobachtet. Hieraus werden in an sich bekannter Weise lokale Brechwerte für die Volumenenelemente 12a der Windschutzscheibe 12 ermittelt, und zwar auch für die Volumenelemente, die außerhalb der optischen Achse liegen. Ferner ist eine zweite Kamera 15 vorgesehen, welche auf der gleichen Seite der Windschutzscheibe 12 angeordnet ist wie das dynamische Gitter 11 und die das von der Windschutzscheibe 12 reflektierte Licht beobachtet.

Durch die zweite Kamera 15 wird gleichzeitig mittels Deflektometrie die Form der Oberfläche 17 der Windschutzscheibe 12 bestimmt. Hierbei wird für jedes Volumenelement 12a die dreidimensionale Form der dem Muster / Gitter 11 zugewandten Oberfläche und die Lage des jeweiligen Volumenelements 12a ermittelt. Die Form der Oberfläche 17 des transparenten Gegenstands 12 geht in die Bestimmung des lokalen Brechwerts des jeweiligen, in der Transmissionsmessung betrachteten Volumenelements 12a mit ein. Hierdurch können für Volumenelemente, die nicht auf der optischen Achse 19 liegen, Korrekturen an dem ermittelten lokalen Brechwert vorgenommen werden, die sich aus der Form der Oberfläche 17 der Windschutzscheibe 12 und der Lage des Volumenelements in der Windschutzscheibe ergeben, wenn der lokale Brechwert weit außerhalb der optischen Achse bestimmt wurde. Weder die Windschutzscheibe 12 noch die erste Kamera 13 mit dynamischem Gitter 11 müssen somit für die Bestimmung des Brechwerts während der Messung bewegt werden. Hierdurch wird die Messzeit erheblich verkürzt und die Genauigkeit der ermittelten Brechwerte erhöht.

Mit der ersten Kamera 13 werden anhand der Verzerrung des Gitters 11 optische Effekte gemessen, die sowohl von der großflächigen Form der Windschutzscheibe 12 als auch durch lokale Deformationen auf der Oberfläche 17 oder im Volumen der Windschutzscheibe 12 verursacht werden. Wenn erfindungsgemäß die lokalen dreidimensionalen Formen der Oberfläche 17 aller Volumenelemente 12a zu einer dreidimensionalen Gesamtform der Oberfläche 17 der Windschutzscheibe 12 zusammengesetzt werden, können in der erfindungsgemäßen Vorrichtung globale Effekte herausgerechnet werden, die durch die großflächige Form des Gegenstands hervorgerufen werden. Hierdurch können bei der Bestimmung des lokalen Brechwerts die durch lokale Deformationen verursachten optischen Effekte angegeben werden. Es können demnach mit der vorliegenden Erfindung großflächige und lokale optische Effekte getrennt werden.

Im Rahmen einer Qualitätsprüfung des transparenten Gegenstands werden die für die vorgegebenen Volumenelemente (z.B. eines Sichtbereichs) ermittelten Brechwerte mit vorgegebenen Brechwerten oder Brechwert-Bereichen verglichen. Entsprechen die ermittelten Brechwerte nicht den vorgegebenen Brechwerten oder Brechwert-Bereichen, so erfüllt der jeweilige transparente Gegenstand nicht die Qualitätsanforderungen und ein Fehler wird signalisiert und/oder der Gegenstand wird aus dem Produktionsprozess ausgesondert.

### Bezugszeichenliste

- 1: Projektor
- 2: transparenter Gegenstand
- 3: Projektionswand
- R1: Entfernung Projektor - transparenter Gegenstand
- R2: Entfernung transparenter Gegenstand - Projektionswand
- 11: dynamisches Gitter
- 12: Windschutzscheibe
- 12a: Volumenelement der Windschutzscheibe
- 13: erste Kamera
- 15: zweite Kamera
- 17: Oberfläche der Windschutzscheibe

## Patentansprüche

1. Verfahren zur Bestimmung eines lokalen Brechwerts von Volumenelementen eines scheibenförmigen transparenten Gegenstands (12) in Richtung einer optischen Achse, beispielsweise eine Durchsichtsrichtung durch eine Windschutzscheibe, mit einem Muster, das durch den transparenten Gegenstand (12) hindurch mittels einer ersten Kamera (13) beobachtet wird, wobei durch die Beobachtungsrichtung der ersten Kamera (13) die optische Achse festgelegt wird, wobei durch Beobachtung des Musters durch den transparenten Gegenstand ein lokaler Brechwert für das jeweilige Volumenelement bestimmt wird, **dadurch gekennzeichnet, dass** die dreidimensionale Form und Lage der dem Muster zugewandten Oberfläche (17) des jeweiligen Volumenelements (12a) des transparenten Gegenstands ermittelt und derart zur Bestimmung des lokalen Brechwerts herangezogen wird, dass der durch Beobachtung des Musters bestimmte lokale Brechwert basierend auf der bekannten dreidimensionalen Form und Lage der Oberfläche (17) korrigiert wird, wenn das jeweilige Volumenelement außerhalb der optischen Achse liegt.

2. Verfahren nach Anspruch 1, **dadurch gekennzeichnet, dass** die dreidimensionale Form und Lage der Oberfläche (17) mithilfe einer zweiten Kamera (15) mittels Deflektometrie ermittelt wird.

3. Verfahren nach einem der vorhergehenden Ansprüche, **dadurch gekennzeichnet, dass** zur Erzeugung des Musters ein dynamisches Gitter (11) verwendet wird.

4. Verfahren nach einem der vorhergehenden Ansprüche, **dadurch gekennzeichnet, dass** die dreidimensionale Gesamtform der dem Muster zugewandten Oberfläche des transparenten Gegenstands (12) durch Zusammensetzen der dreidimensionalen Formen aller Volumenelemente (12a) bestimmt wird.

5. Verfahren nach Anspruch 3, **dadurch gekennzeichnet, dass** die dreidimensionale Gesamtform mit CAD-Daten zu dem transparenten Gegenstand (12) verglichen wird und hieraus ein für die Bestimmung des lokalen Brechwerts auszuwählender Sichtbereich ermittelt wird.

6. Verfahren nach einem der vorhergehenden Ansprüche, **dadurch gekennzeichnet, dass** für jeden ermittelten lokalen Brechwert dessen lokaler Anteil und dessen globaler Anteil bestimmt wird, wobei der lokale Anteil durch lokale Deformation verursacht wird und der globale Anteil den Brechwertanteil beinhaltet, der durch die globale Gesamtform des Gegenstands bestimmt wird.

7. Vorrichtung zur Bestimmung eines lokalen Brechwerts von Volumenelementen eines scheibenförmigen transparenten Gegenstands (12) in Richtung einer optischen Achse, beispielsweise eine Durchsichtsrichtung durch eine Windschutzscheibe, mit einer ersten Kamera (13) und einem Muster (11), wobei durch die Beobachtungsrichtung der ersten Kamera (13) die optische Achse festgelegt ist, wobei die Vorrichtung dazu eingerichtet ist, den lokalen Brechwert mithilfe des vorgegebenen Musters zu bestimmen, das durch den transparenten Gegenstand (12) mittels der ersten Kamera (13) beobachtbar ist, **dadurch gekennzeichnet, dass** die Vorrichtung weiter dazu eingerichtet ist, die dreidimensionale Form und Lage der dem Muster zugewandten Oberfläche (17) des jeweiligen Volumenelements (12a) des transparenten Gegenstands (12) zu ermitteln und zur Bestimmung des lokalen Brechwerts derart heranzuziehen, dass der durch Beobachtung des Musters bestimmte lokale Brechwert basierend auf der bekannten dreidimensionalen Form und Lage der Oberfläche (17) korrigiert wird, wenn das jeweilige Volumenelement außerhalb der optischen Achse liegt.

8. Vorrichtung nach Anspruch 7, welche dazu eingerichtet ist, die dreidimensionale Form und Lage der Oberfläche mithilfe einer zweiten Kamera (15) mittels Deflektometrie zu ermitteln.

9. Vorrichtung nach einem der Ansprüche 7 bis 8, **dadurch gekennzeichnet, dass** ein dynamisches Gitter (11) zur Erzeugung des Musters vorgesehen ist.

10. Vorrichtung nach einem der Ansprüche 7 bis 9, welche dazu eingerichtet ist, die dreidimensionale Gesamtform der dem Muster zugewandten Oberfläche (17) des transparenten Gegenstands (12) durch Zusammensetzen der dreidimensionalen Formen aller Volumenelemente (12a) bestimmt wird.

11. Vorrichtung nach Anspruch 10, welche dazu eingerichtet ist, die dreidimensionale Gesamtform mit CAD-Daten zu dem transparenten Gegenstand (12) zu vergleichen und hieraus ein für die Bestimmung des lokalen Brechwerts auszuwählender Sichtbereich zu ermitteln.

12. Vorrichtung nach einem der Ansprüche 7 bis 11, welche dazu eingerichtet ist, für jeden ermittelten lokalen Brechwert dessen lokalen Anteil und dessen globalen Anteil zu bestimmen, wobei der lokale Anteil durch lokale Deformation verursacht wird und der globale Anteil den Brechwertanteil beinhaltet, der durch die globale Gesamtform des Gegenstands bestimmt wird.

## Claims

1. Method for determining a local refractive power of volume elements of a panel-shaped transparent object (12) in the direction of an optical axis, for example a direction of view through a windscreen, comprising a pattern which is observed through the transparent object (12) by means of a first camera (13), wherein the optical axis is defined by the observation direction of the first camera (13), wherein a local refractive power is determined for the respective volume element by observing the pattern through the transparent object, **characterised in that** the three-dimensional shape and position of the surface (17) of the respective volume element (12a) of the transparent object facing the pattern is determined and is used to determine the local refractive power in such a way that the local refractive power determined by observing the pattern is adjusted based on the known three-dimensional shape and position of the surface (17) if the respective volume element is located off the optical axis.

2. Method according to claim 1, **characterised in that** the three-dimensional shape and position of the surface (17) is determined by means of deflectometry using a second camera (15).

3. Method according to any one of the preceding claims, **characterised in that** a dynamic grid (11) is used to generate the pattern.

4. Method according to any one of the preceding claims, **characterised in that** the overall three-dimensional shape of the surface of the transparent object (12) facing the pattern is determined by combining the three-dimensional shapes of all the volume elements (12a).

5. Method according to claim 3, **characterised in that** the three-dimensional overall shape is compared with CAD data of the transparent object (12) and on the basis thereof a visual range to be selected for determining the local refractive power is identified.

6. Method according to one of the preceding claims, **characterised in that** for each determined local refractive power value, its local fraction and its global fraction are determined, wherein the local fraction is caused by local deformation and the global fraction includes the fraction of the refractive power determined by the global overall shape of the object.

7. Apparatus for determining a local refractive power of volume elements of a panel-shaped transparent object (12) in the direction of an optical axis, for example a direction of view through a windscreen, comprising a first camera (13) and a pattern (11), wherein the optical axis is defined by the observation direction of the first camera (13), wherein the apparatus is adapted to determine the local refractive power by means of the predetermined pattern observable through the transparent object (12) using the first camera (13), **characterised in that** the device is further adapted to determine the three-dimensional shape and position of the surface (17) of the respective volume element (12a) of the transparent object (12) facing the pattern and to use it to determine the local refractive power in such a way that the local refractive power determined by observing the pattern is adjusted based on the known three-dimensional shape and position of the surface (17) if the respective volume element is located off the optical axis.

8. Apparatus according to claim 7, which is adapted to determine the three-dimensional shape and position of the surface by means of deflectometry using a second camera (15).

9. Apparatus according to any one of claims 7 to 8, **characterised in that** a dynamic grid (11) is provided for generating the pattern.

10. Apparatus according to any one of claims 7 to 9, which is adapted to determine the overall three-dimensional shape of the surface (17) of the transparent object (12) facing the pattern by combining the three-dimensional shapes of all volume elements (12a).

11. Apparatus according to claim 10, which is adapted to compare the three-dimensional overall shape with CAD data of the transparent object (12) and on the basis thereof to determine a visual range to be selected for determining the local refractive power.

12. Apparatus according to any one of claims 7 to 11, which is adapted to identify for each determined local refractive power value its local fraction and its global fraction, wherein the local fraction is caused by local deformation and the global fraction includes the refractive power fraction determined by the overall global shape of the object.

## Revendications

1. Procédé de détermination d'un pouvoir de réfraction local d'éléments volumiques d'un objet (12) transparent en forme de disque en direction d'un axe optique, par exemple une direction de transparence à travers un pare-brise, avec un modèle, qui est observé à travers l'objet transparent (12) au moyen d'une première caméra (13), sachant que par la direction d'observation de la première caméra (13) l'axe optique est fixé, sachant que par l'observation du modèle à travers l'objet transparent un pouvoir de réfraction local est déterminé pour l'élément volumique respectif, **caractérisé en ce que** la forme tridimensionnelle et la position de la surface (17) tournée vers le modèle de l'élément volumique (12a) respectif de l'objet transparent sont déterminées et sont utilisées pour déterminer le pouvoir de réfraction local de telle manière que le pouvoir de réfraction local déterminé par l'observation du modèle est corrigé en se basant sur la forme tridimensionnelle et la position connues de la surface (17), si l'élément volumique respectif se situe en dehors de l'axe optique.

2. Procédé selon la revendication 1, **caractérisé en ce que** la forme tridimensionnelle et la position de la surface (17) sont déterminées à l'aide d'une deuxième caméra (15) au moyen de la déflectrométrie.

3. Procédé selon l'une quelconque des revendications précédentes, **caractérisé en ce qu'**un réseau dynamique (11) est utilisé pour produire le modèle.

4. Procédé selon l'une quelconque des revendications précédentes, **caractérisé en ce que** la forme générale tridimensionnelle de la surface tournée par le modèle de l'objet transparent (12) est déterminée par assemblage des formes tridimensionnelles de tous les éléments volumiques (12a).

5. Procédé selon la revendication 3, **caractérisé en ce que** la forme générale tridimensionnelle est comparée à des données de conception assistée par ordinateur (CAO) par rapport à l'objet transparent (12) et une zone de vision à sélectionner est définie à partir de cela pour la détermination du pouvoir de réfraction local.

6. Procédé selon l'une quelconque des revendications précédentes, **caractérisé en ce que** pour chaque pouvoir de réfraction local défini la part locale de celui-ci et la part globale de celui-ci est déterminée, sachant que la part locale est causée par la déformation locale et la part globale contient la part de pouvoir de réfraction qui est déterminée par la forme générale globale de l'objet.

7. Dispositif de détermination d'un pouvoir de réfraction local d'éléments volumiques d'un objet (12) transparent en forme de disque en direction d'un axe optique, par exemple une direction de transparence à travers un pare-brise, avec une première caméra (13) et un modèle (11), sachant que par la direction d'observation de la première caméra (13) l'axe optique est fixé, sachant que le dispositif est agencé à cet effet pour déterminer le pouvoir de réfraction local à laide du modèle prédéfini, qui peut être observé à travers l'objet transparent (12) au moyen de la première caméra (13), **caractérisé en ce que** le dispositif est en plus agencé à cet effet pour déterminer la forme tridimensionnelle et la position de la surface (17) tournée vers le modèle de l'élément volumique (12a) respectif de l'objet transparent (12) et les utiliser pour la détermination du pouvoir de réfraction local de telle manière que le pouvoir de réfraction local déterminé par l'observation du modèle est corrigé en se basant sur la forme tridimensionnelle et la position connues de la surface (17), si l'élément volumique respectif se situe en dehors de l'axe optique.

8. Dispositif selon la revendication 7, lequel est agencé pour déterminer la forme tridimensionnelle et la position de la surface à l'aide d'une deuxième caméra (15) au moyen de la déflectrométrie.

9. Dispositif selon l'une quelconque des revendications 7 à 8, **caractérisé en ce qu'**un réseau dynamique (11) est prévu pour produire le modèle.

10. Dispositif selon l'une quelconque des revendications 7 à 9, lequel est agencé à cet effet de telle manière que la forme générale tridimensionnelle de la surface (17) tournée vers le modèle de l'objet transparent (12) est déterminée par assemblage des formes tridimensionnelles de tous les éléments volumiques (12a).

11. Dispositif selon la revendication 10, lequel est agencé à cet effet pour comparer la forme générale tridimensionnelle à des données de conception assistée par ordinateur (CAO) par rapport à l'objet transparent (12) et déterminer à partir de cela une zone de vision à sélectionner pour la détermination du pouvoir de réfraction local.

12. Dispositif selon l'une quelconque des revendications 7 à 11, lequel est agencé à cet effet pour déterminer pour chaque pouvoir local déterminé la part locale de celui-ci et la part globale de celui-ci, sachant que la part locale est causée par déformation locale et la part globale contient la part de pouvoir de réfraction, qui est déterminée par la forme générale globale de l'objet.
